# EUROPÄISCHE PATENTSCHRIFT

(11) **EP 2 280 820 B1**
(45) Veröffentlichungstag und Bekanntmachung des Hinweises auf die Patenterteilung: **31.05.2017**
(21) Anmeldenummer: 09730468.7
(22) Anmeldetag: 07.04.2009
(51) Int. Cl.: B29C 70/38, B29C 70/54, B29C 70/56, B29B 11/16, B29C 53/56, B29C 70/20

(54) **VERFAHREN ZUR HERSTELLUNG EINES FVW/FVK-BAUTEILS AUS ROVINGS MIT EINEM FORMWERKZEUG UND FORMWERKZEUG ZUR DURCHFÜHRUNG DES VERFAHRENS**
METHOD FOR THE PRODUCTION OF A FIBER COMPOSITE/FIBER-REINFORCED PLASTIC PART FROM ROVINGS BY MEANS OF A MOLD, AND MOLD FOR CARRYING OUT SAID METHOD
PROCÉDÉ DE FABRICATION D'UN ÉLÉMENT EN MATÉRIAU/PLASTIQUE RENFORCÉ PAR DES FIBRES À PARTIR DE MÈCHES AU MOYEN D'UN MOULE ET MOULE DESTINÉ À LA RÉALISATION DE CE PROCÉDÉ

(30) Priorität: 07.04.2008 US 42831 P; 07.04.2008 DE 102008017573
(43) Veröffentlichungstag der Anmeldung: 09.02.2011
(73) Patentinhaber: Airbus Operations GmbH, 21129 Hamburg (DE)
(72) Erfinder: BARLAG, Carsten, 26441 Jever (DE)
(74) Vertreter: Bird & Bird LLP
(86) Internationale Anmeldenummer: PCT/EP2009/002568
(87) Internationale Veröffentlichungsnummer: WO 2009/124724

(56) Entgegenhaltungen:
- EP-A- 0 193 380
- EP-A- 0 591 822
- JP-A- 9 176 933
- JP-A- 11 001 844
- JP-A- 2005 097 759

## Beschreibung

Die Erfindung betrifft ein Verfahren zur Herstellung eines FVW/FVK-Bauteils aus Rovings mit einem Formwerkzeug und ein Formwerkzeug zur Durchführung des Verfahrens.

Aus der DE 10 2004 0077 313 A1 ist ein Verfahren zur Herstellung eines mit Endlosfasern verstärkten Polymer-Formteils bekannt. Bei diesem Verfahren werden mittels einer Handhabungseinrichtung Endlosfasern, die mit einem plastifizierten Polymer imprägniert sind, auf einer Hilfsform angeordnet. Die Hilfsform ist zur Aufnahme der Endlosfasern mit Wickeldornen zur Aufnahme der Endlosfasern in der jeweils gewünschten Orientierung ausgestattet. Den Wickeldornen ist eine Abstreifeinrichtung zugeordnet, welche zum Abstreifen der auf die Wickeldorne aufgewickelten Endlosfasern ausgebildet ist. Die orientierten Endlosfasern werden mittels der Hilfsform in ein wenigstens zweiteiliges, offenes Formwerkzeug überführt und dort abgelegt, wonach das Formwerkzeug geschlossen wird und die imprägnierten, orientierten Endlosfasern allein oder unter Zugabe weiteren Polymers unter Bildung des endlosfaserverstärkten Polymer-Formteils verpresst werden. Anschließen wird das Polymer-Formteil abgekühlt und dem Formwerkzeug entnommen.

Aus der EP 0 193 380 A2 ist ein Verfahren zur Herstellung eines Helms aus Filamentgarnen bekannt, bei dem die Filamentgarne auf einem Formteil in regellosen Kurvenbahnen zur Bildung der Bauteiloberfläche abgelegt werden, wobei die Filamentgarne über der Oberfläche des Formteils verteilt und an den Stiften, die an der Formteiloberfläche ein- und ausfahrbar angeordnet sind, umgelenkt werden.

Aus der DE 42 34 083 A1 ist ein Verfahren zum Legen von textilen Fäden bekannt, bei dem jeder Faden auf einer kurvenförmigen Bahn kontinuierlich zugeführt und um innerhalb der kurvenförmigen Bahn angeordneten Variablen Fixpunkten gelegt wird. Aus der DE 10 2005 034 393 A1 ist ein Verfahren zum kraftschlussorientierten Legen von textilen Fäden bekannt.

Aus der JP 09-176933 ist ein dreidimensionales Faserbauteil bekannt, das im Wesentlichen aus zwei plattenförmigen Teilen besteht, die an einer Stoßkante verbunden sind und einen Winkel einschließen. Die plattenförmigen Teile bestehen jeweils aus einer inneren und einer äußeren Schicht, die jeweils aus mehreren laminierten in einer Ebene verlaufender und senkrecht vernähter Faserschichten gebildet sind, wobei zwischen diesen Schichten an der Stoßkante ein Füllmaterial eingewebt ist, um die Belastbarkeit der Stoßkante zu erhöhen. Aus der JP 11-001844 ist ein dreidimensionales Faserformteil mit nicht abwickelbarer Gestalt bekannt. Das Faserformteil bestehen aus mehreren laminierten im Faserformteil verlaufender sowie senkrecht vernähter Faserschichten gebildet.

Aufgabe der Erfindung ist, ein Verfahren zur Herstellung eines FVW- oder FVK-Bauteils und eine Vorrichtung zur Durchführung des Verfahrens bereitzustellen, das bzw. die für die Herstellung komplexer FVW- oder FVK-Bauteile geeignet ist.

Diese Aufgabe wird mit den Merkmalen der unabhängigen Ansprüche gelöst. Weitere Ausführungsformen sind in den auf diese rückbezogenen Unteransprüchen angegeben.

Mit dem erfindungsgemäßen Verfahren bzw. der erfindungsgemäßen Vorrichtung können Preforms und somit Bauteile mit einer zumindest teilweise nicht abwickelbaren Gestalt mit relativ großer Genauigkeit hergestellt werden.

Erfindungsgemäß ist ein Verfahren zur Herstellung eines FVW/FVK-Bauteils mit einer zumindest teilweisen nicht abwickelbaren Gestalt aus zumindest einem Roving mit einem Formwerkzeug vorgesehen, das insbesondere die Schritte aufweist:
▪ Auftragen zumindest eines aus trockenen Fasern gebildeten Rovings auf die Form-Oberfläche durch Spannen des Rovings mittels einer Aufbringungs-Vorrichtung unter Aufrechterhaltung einer vorbestimmten Mindest-Zugspannung zwischen Umlenk-Vorrichtungen in vorgegebenen Orientierungen, die seitlich einer zumindest bereichsweise konvex geformte Auftrags-Oberfläche und in Längsrichtung derselben angeordnet sind, wobei der zumindest eine Roving zwischen den Umlenk-Vorrichtungen derart entlang der Form-Oberfläche aufgespannt werden, dass die Rovings die Form-Oberfläche zumindest bereichsweise zur Ausbildung des Preforms überdecken,
▪ Auftragen von Bindermaterial auf die aufgespannten Rovings;
▪ Konsolidierung der Anordnung von Fasersträngen und Bindermaterial durch Anwendung von Temperatur und optional Druck zur Ausbildung eines Preforms für das herzustellende Bauteil;
▪ Lösen des Preforms von den Umlenk-Vorrichtungen und Entnahme des Preforms von dem Formwerkzeug; und
▪ nach dem Lösen des Preforms von den Umlenk-Vorrichtungen Durchführung eines Injektionsverfahrens oder Infusionsverfahrens zur Ausbildung des Bauteils.

Erfindungsgemäß kann insbesondere vorgesehen sein, dass der zumindest eine Roving zwischen den Umlenk-Vorrichtungen derart aufgespannt wird, dass der zumindest eine Roving die Form-Oberfläche zumindest bereichsweise zur Ausbildung des Preforms überdeckt und dabei von den Umlenk-Vorrichtungen unter Aufrechterhaltung einer Zugspannung von zumindest 30 N gehalten wird.

Durch das Aufspannen des zumindest einen Rovings mit einer vorbestimmten Zugspannung oder einer vorbestimmten Mindest-Zugspannung über die Form-Oberfläche verlaufen die die Form-Oberfläche überspannenden Roving-Abschnitte geradlinig auf dieser. Dies bedeutet, dass das konsolidierte Preform aus mit großer Genauigkeit geradlinig verlaufenden Roving-Abschnitten gebildet ist. Dies wiederum bewirkt, dass das aus dem Preform jeweils hergestellte fertige Bauteil ebenfalls aus geradlinig verlaufenden Rovings oder Fasern gebildet ist, so dass eine optimale Bauteilqualität gewährleistet werden kann.

Auch erfolgt durch das Aufspannen des zumindest einen Rovings mit einer vorbestimmten Zugspannung oder einer vorbestimmten Mindest-Zugspannung über die Form-Oberfläche eine Vorkompaktierung der abgelegten Anordnung von Rovings zusammen mit dem Bindermaterial. Dadurch muss bei der Konsolidierung der Anordnung von Fasersträngen und Bindermaterial kein Pressvorgang oder generell Ausübung von Druck auf die Anordnung von Fasersträngen und Bindermaterial erfolgen, wodurch der Verlauf der Fasern oder Rovings und insbesondere die Geradlinigkeit des Verlaufs der Fasern oder Rovings beeinträchtigt wird. Diese Maßnahme trägt also ebenfalls zu einer Optimierung der Bauteilqualität bei. Die Vorkompaktierung der abgelegten Anordnung von Rovings zusammen mit dem Bindermaterial kann also lediglich durch Wärmebehandlung, beispielsweise ein Bestrahlen der abgelegten Anordnung von Rovings zusammen mit dem Bindermaterial mit Mikrowelle oder Infrarotstrahlung erfolgen. Alternativ oder zusätzlich kann ein Erwärmen der Fasern durch Widerstanderwärmung vorgesehen sein, bei der die Fasern mit elektrischem Strom derart beschickt werden, dass diese auf vorbestimmte Weise erwärmt werden. Bei der Erwärmung der Anordnung von Rovings zusammen mit dem Bindermaterial ist insbesondere ein Erwärmen auf einen Bereich zwischen 60 und 100 Grad Celsius vorgesehen.

Bei dem erfindungsgemäßen Verfahren kann die Form-Oberfläche des Formwerkzeugs derart gestaltet und können die Umlenk-Vorrichtungen derart auf der Form-Oberfläche angeordnet sein, dass diese eine Auftrags-Oberfläche mit einer bereichsweise nicht-abwickelbaren Oberflächengestalt abstecken.

Unter einer nicht abwickelbaren Auftrags-Oberfläche wird erfindungsgemäß eine Gestalt der Auftrags-Oberfläche verstanden, die in zwei Dimensionen gekrümmt ist. In diesem Fall kann die Auftrags-Oberfläche zumindest bereichsweise z.B. eine Kugelform, eine ellipsoide Form oder die Form einer Sattelfläche haben. Umgekehrt wird in diesem Zusammenhang unter einer abwickelbaren Oberfläche eine insbesondere dreidimensionale Oberfläche verstanden, die sich ohne innere Formveränderung, d.h. längentreu in die Ebene transformieren lässt.

Die erfindungsgemäß vorgesehenen Umlenk-Vorrichtungen können stiftförmig von der Form-Oberfläche des Formwerkzeugs wegragen.

Das Lösen des Preforms von den Umlenk-Vorrichtungen kann durch Abschneiden der die die Umlenkvorrichtung jeweils umlaufenden Roving-Abschnitte von den auf der Form-Oberfläche aufliegenden Roving-Abschnitten erfolgt.

Das Lösen des Preforms von den Umlenk-Vorrichtungen kann durch Einfahren von bewegbar am Formwerkzeug angeordneten Umlenk-Vorrichtungen und/oder durch Abschneiden der von zumindest einem Teil der Umlenk-Vorrichtungen umgelenkten Rovings in der Nähe der Umlenk-Vorrichtungen erfolgen.

Nach einem weiteren Ausführungsbeispiel des erfindungsgemäßen Verfahrens ist vorgesehen:
▪ dass vor dem Auftragen des zumindest einen Rovings auf die Form-Oberfläche eines Formwerkzeugs dieses auf einer Werkzeugauflage-Vorrichtung angeordnet wird, wobei die Werkzeugauflage-Vorrichtung Umlenkbereiche aufweist, die bei von der Werkzeugauflage-Vorrichtung mittels der Aufnahmevorrichtung aufgenommenem Formwerkzeug sich in der Längsrichtung und entlang der Form-Oberfläche erstrecken und eine Vielzahl von Umlenk-Vorrichtungen aufweisen, wobei sich die Umlenkbereiche auf jeweils einander entgegengesetzt zueinander gelegenen Seiten der Form-Oberfläche erstrecken,
▪ dass nach dem Auftragen des Rovings auf die Form-Oberfläche des Formwerkzeugs mittels Umlenkung der Endlosfasern durch die Umlenk-Vorrichtungen das Auftragen von Bindermaterial, die Konsolidierung der Anordnung von Fasersträngen und Bindermaterial und das Lösen des Preforms von dem Formwerkzeug erfolgen.

Dadurch dass die Umlenk-Vorrichtungen an den Bereichen der Werkzeugauflage-Vorrichtung seitlich der Ausnahmevorrichtung bzw. der Formwerkzeugs vorgesehen sind, können Varianten des Formwerkzeugs verwendet werden, ohne dass der Rest der Herstellungsvorrichtung ausgewechselt werden muss. Dadurch ist es möglich, dass Preforms für z.B. Spante eines Flugzeugs für verschiedenen Rupfsektionen, die sich in ihrer Form nur wenig unterscheiden oder die sich nicht in ihrer Form, jedoch in ihren Abmessungen unterscheiden, auf derselben Ausnahmevorrichtung hergesellt werden können. Dadurch kann die Wirtschaftlichkeit des erfindungsgemäßen Verfahrens verbessert werden.

Nach einem weiteren Aspekt der Erfindung ist ein Formwerkzeug zur Herstellung eines FVW/FVK-Bauteils mit einer zumindest teilweisen nicht abwickelbaren Gestalt aus Endlosfasern vorgesehen, aufweisend eine zumindest bereichsweise konvex geformte Form-Oberfläche, wobei das Formwerkzeug zwei außerhalb der Form-Oberfläche und in der Längsrichtung und entlang der Form-Oberfläche verlaufende Umlenkbereiche und eine Vielzahl von Umlenk-Vorrichtungen aufweist, wobei sich die Umlenkbereiche auf jeweils einander entgegengesetzt zueinander gelegenen Seiten der Form-Oberfläche erstrecken und wobei über die Umlenkbereiche entlang der Längsrichtung die in den Umlenkbereichen angeordneten Umlenk-Vorrichtungen verteilt sind, so dass die Umlenk-Vorrichtungen zur Umlenkung des zumindest einen über die Form-Oberfläche unter Aufrechterhaltung einer vorbestimmten Mindest-Zugspannung gespannten Rovings geeignet sind.

Nach einem weiteren Ausführungsbeispiel des erfindungsgemäßen Formwerkzeugs kann vorgesehen sein, dass die Umlenk-Vorrichtungen mittels einer Verstellvorrichtung zum Lösen des Preforms unter die Form-Oberfläche in das Formwerkzeug einfahrbar sind und derart gestaltet sind, dass diese beim Einfahren die an diesen umgelenkten Endlosfasern abstreifen.

Nach einem weiteren Ausführungsbeispiel des erfindungsgemäßen Formwerkzeugs kann vorgesehen sein, dass die Form-Oberfläche des Formwerkzeugs eine bereichsweise nicht-abwickelbare Oberflächengestalt aufweist.

Nach einem weiteren Ausführungsbeispiel des erfindungsgemäßen Formwerkzeugs kann vorgesehen sein, dass die Umlenk-Vorrichtungen Stifte aufweisen, die von der Form-Oberfläche des Formwerkzeugs wegragen.

Nach einem weiteren Ausführungsbeispiel des erfindungsgemäßen Formwerkzeugs kann vorgesehen sein, dass jeder Umlenk-Vorrichtung jeweils eine Verstellvorrichtung mit einer Antriebsvorrichtung gekoppelt ist, wobei die Antriebsvorrichtungen einzeln von einer Steuervorrichtung angesteuert werden können.

Nach einem weiteren Aspekt der Erfindung ist eine Herstellungsvorrichtung mit einem Formwerkzeug und einer Werkzeugauflage-Vorrichtung zur Herstellung eines FVW/FVK-Bauteils mit einer zumindest teilweisen nicht abwickelbaren Gestalt aus zumindest einem Roving vorgesehen, wobei:
▪ die Herstellungsvorrichtung eine Abgabevorrichtung zur Abgabe zumindest eines Rovings aufweist,
▪ das Formwerkzeug eine nach außen gewölbte Form-Oberfläche aufweist,
▪ die Werkzeugauflage-Vorrichtung eine Aufnahmevorrichtung zur Aufnahme des Formwerkzeugs sowie Umlenkbereiche aufweist, die bei von der Werkzeugauflage-Vorrichtung mittels der Aufnahmevorrichtung aufgenommenem Formwerkzeug sich in der Längsrichtung und entlang der Form-Oberfläche erstrecken und eine Vielzahl von Umlenk-Vorrichtungen aufweisen, wobei sich die Umlenkbereiche auf jeweils einander entgegengesetzt zueinander gelegenen Seiten der Form-Oberfläche erstrecken, und
▪ über die Umlenkbereiche entlang der Längsrichtung die in den Umlenkbereichen angeordneten Umlenk-Vorrichtungen verteilt sind, so dass die Umlenk-Vorrichtungen zur Umlenkung des über die Form-Oberfläche unter Aufrechterhaltung einer vorbestimmten Mindest-Zugspannung gespannten Rovings geeignet sind.

Nach einem weiteren Ausführungsbeispiel der erfindungsgemäßen Herstellungsvorrichtung ist vorgesehen, dass die Herstellungsvorrichtung eine Ablagevorrichtung mit einer Vorspanneinrichtung aufweist, mit der die Endlosfasern mit einer vorbestimmten Mindest-Zugspannung mittels Umlenkung durch die Umlenk-Vorrichtungen über die Form-Oberfläche gespannt werden können. Dadurch erfolgt eine gestreckte Ablage der Rovings abschnittsweise, d.h. eine geradlinige Ablage derselben auf der Form-Oberfläche.

Nach einem weiteren Ausführungsbeispiel der erfindungsgemäßen Herstellungsvorrichtung ist vorgesehen, dass die Ablagevorrichtung einen Roboterarm aufweist, der eine Einlassvorrichtung zum Einführen zumindest eines Rovings und eine an dessen dreidimensional bewegbarem Ende angeordnete Auslassvorrichtung zum Herausführen des Rovings aufweist. Mit dem Roboterarm ist das gestreckte Ablegen und Aufspannen des zumindest einen Rovings zwischen den Umlenkvorrichtungen jeweils unter Umlaufen jeweils einer Umlenkvorrichtung auf vorteilhafte Weise möglich.

Nach einem weiteren Ausführungsbeispiel der erfindungsgemäßen Herstellungsvorrichtung ist vorgesehen, dass der Roboterarm eine in Faserlängsrichtung einer von dem Roboterarm aufgenommenen Rovings gesehen hinter dem bewegbarem Ende gelegene Kinematik zum Ausgleich von Relativbewegungen gegenüber Umlenk-Vorrichtungen aufweist.

Nach einem weiteren Ausführungsbeispiel der erfindungsgemäßen Herstellungsvorrichtung ist vorgesehen, dass die Herstellungsvorrichtung eine Rolle zur Aufnahme des Rovings aufweist und dass die Aufnahmerolle mit einer Rutschkupplung gelagert ist, durch die die Mindest-Zugspannung, mit der der Roving auf die Form-Oberfläche gespannt werden, auf einen maximalen Wert begrenzt wird.

Nach einem weiteren Ausführungsbeispiel der erfindungsgemäßen Herstellungsvorrichtung ist vorgesehen, dass die Herstellungsvorrichtung eine Portalanlage ist und eine verschiebbare Portalvorrichtung mit der Ablagevorrichtung und insbesondere des Roboterarms aufweist.

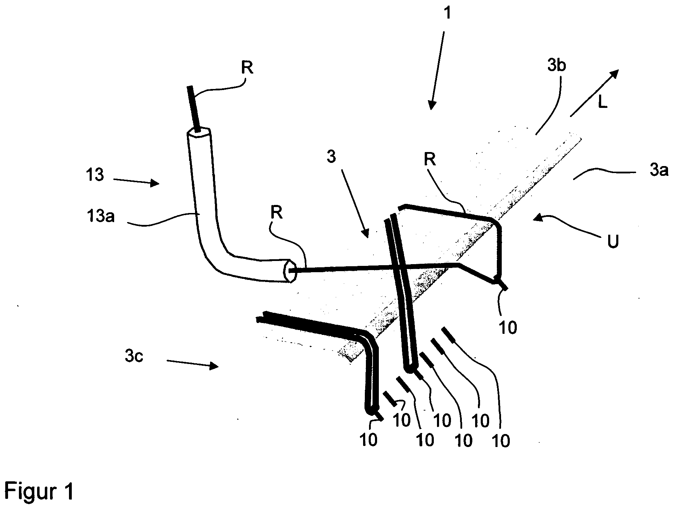

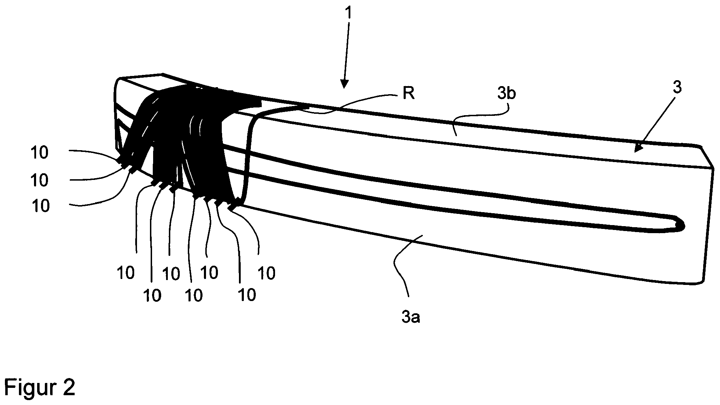

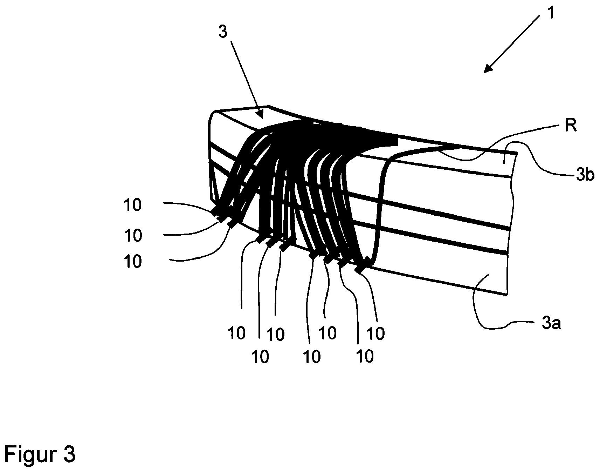

Im Folgenden werden Ausführungsbeispiele der Erfindung an Hand der beiliegenden Figuren erläutert, die zeigen:
▪ Figur 1 eine schematische Perspektiv-Darstellung eines Ausführungsbeispiels des erfindungsgemäßen Herstellungswerkzeugs zur Durchführung des erfindungsgemäßen Verfahrens zur Herstellung eines FVW- oder FVK-Bauteils mit einer abwickelbaren Form-Oberfläche aus mehreren sich winklig zueinander erstreckenden Auftrags-Oberflächen mit Umlenk-Vorrichtungen in Form von Stiften, wobei weiterhin eine Rohrführungs-Vorrichtung dargestellt ist, mit der Rovings unter Aufwendung einer Zugkraft zwischen den Umlenk-Stiften entlang der Form-Oberfläche aufgespannt werden;
▪ Figur 2 eine schematische Perspektiv-Darstellung eines alternativen Ausführungsbeispiels des erfindungsgemäßen Herstellungswerkzeugs oder Form-Werkzeugs, das in seiner Längserstreckung gekrümmt zur Herstellung von FVW- oder FVK-Bauteilen mit gekrümmten Oberflächen gebildet ist, so dass die Form-Oberfläche und die Auftrags-Oberfläche des Herstellungswerkzeugs eine nicht-abwickelbare Oberflächengestalt haben;
▪ Figur 3 eine vergrößerte Detail-Ansicht des in der Figur 2 dargestellten Herstellungswerkzeugs.

Bei dem erfindungsgemäßen Verfahren wird ein Faserverbund-Werkstoff(FVW)- oder Faserverbund-Kunststoff(FVK)-Bauteil (in den Figuren nicht gezeigt) aus Rovings mit Hilfe eines Formwerkzeugs 1 mit einer Form-Oberfläche 3 hergestellt.

Unter "Rovings" wird in diesem Zusammenhang ein Bündel von endlosen Fasern oder Filamenten verstanden, die unverdreht und/oder gestreckt sein können. Die Einzelfilamente können aus Glas, Aramid oder Kohlenstoff gebildet sein. Die erfindungsgemäß verwendeten Rovings R können insbesondere Endlos-Rovings sein und dabei auf Spulen oder Trommeln aufgewickelt sein. Die Rovings R können insbesondere ausschließlich aus Trockenfasern gebildet sein, so dass diese kein Matrix-Material aufweisen. Dabei können die Filamente Kohlefasern sein. Generell können erfindungsgemäß Rovings in Form von Endlos-Rovings, Endlos-Garnen, Endlos-Zwirnen, Endlos-Schnüren, Endlos-Gewirke, Endlos-Webware oder Endlos-Maschenware verwendet werden.

Die Form-Oberfläche 3 weist generell eine oder mehrere Auftrags-Oberflächen 3a, 3b, 3c auf, die zumindest einen Teil der Form-Oberfläche 3 bilden. Die in den Figuren 1, 2 und 3 dargestellten Formwerkzeuge 1 weisen insgesamt drei eine Auftragsfläche bildende Auftrags-Oberflächen 3a, 3b, 3c als Teil der Form-Oberfläche 3 auf, die insbesondere im Querschnitt gesehen jeweils zueinander winklig verlaufen können. Generell können die Oberflächen-Abschnitte der Auftrags-Oberflächen 3a, 3b, 3c oder die Auftragsfläche durch Kanten und/oder durch einen Radius oder einen gewölbten Oberflächenbereich verbunden sein. Alternativ oder zusätzlich kann die Auftrags-Oberfläche aus einer oder mehreren Oberflächenabschnitten gebildet sein, die eine ebene und/oder eine gewölbte Oberseite haben. Dabei kann die Oberfläche auch einen in Bezug auf die Entform-Richtung ausgebildeten leichten Hinterschnitt aufweisen, der derart gestaltet ist, dass der erstellte Preform noch von dem Formwerkzeug 1 entnommen werden kann, ohne dabei beschädigt zu werden. Generell weist die Formoberfläche zumindest abschnittsweise einen konvex geformten oder gekrümmten Bereich auf.

Generell kann die Form-Oberfläche und insbesondere die Auftragsfläche mit den Auftrags-Oberflächen 3a, 3b, 3c eine abwickelbare oder nicht-abwickelbare Gestalt haben. Das in der Figur 1 dargestellte Ausführungsbeispiel des Herstellungswerkzeugs oder Formwerkzeugs hat eine Form-Oberfläche 3 mit einer Auftragsfläche 3a, 3b, 3c, die eine abwickelbare Oberflächengestalt hat. In den Figuren 2 und 3 ist eine alternative Ausführungsform des Herstellungswerkzeugs dargestellt, das eine Auftragsfläche mit nicht-abwickelbarer Gestalt hat. Das erfindungsgemäße Verfahren ist insbesondere zur Herstellung von Preforms geeignet, die eine Formgebung haben, für die ein Formwerkzeug vorzusehen ist, das eine bereichsweise nicht-abwickelbare Oberflächen-Gestalt hat.

Bei der Verwendung einer nicht abwickelbaren Oberflächen-Gestalt der Auftragsfläche ist die erfindungsgemäß vorgesehene Verwendung von aus trockenen Fasern gebildeten Rovings R vorteilhaft, da beim Auftragen der Rovings R diese besser aneinander abgleiten können, so dass die in den Rovings wirkenden Zugkräfte beim Auftragen derselben minimiert ist. Demgegenüber würde bei der Verwendung von mit Harz oder mit Kunststoff vor-imprägnierten Rovings nebeneinander gelegene Roving-Abschnitte aneinander kleben und das Harz oder der Kunststoff ein Aneinander-Abgleiten der Roving-Abschnitte mehr oder weniger verhindern, so dass dann zwischen diesen Roving-Abschnitten zusätzliche Zugkräfte auftreten und sich diese Roving-Abschnitte nicht ausreichend an komplexere Strukturen, wie insbesondere nicht-abwickelbare Oberflächen-Gestalten anpassen können.

An verschiedenen Stellen der Form-Oberfläche 3 sind Umlenk-Vorrichtungen 10 angeordnet, so dass ein Auftragen von Rovings auf die Form-Oberfläche 3 zwischen den Umlenk-Vorrichtungen erfolgen kann. Die Umlenk-Vorrichtungen 10 umgrenzen die Auftragsfläche mit den Auftrags-Oberflächen 3a, 3b, 3c als Teil der Form-Oberfläche 3, sind also seitlich und entlang derselben aufgereiht. Die Rovings R werden dabei durch Spannen unter Aufrechterhaltung einer vorbestimmten Mindest-Zugspannung um die Umlenk-Vorrichtungen 10 gelegt, so dass diese mit einer der Zugkraft entsprechenden Kraft auf die Auftrags-Oberflächen 3a, 3b, 3c gedrückt werden und die Rovings R zwischen den Umlenk-Vorrichtungen 10 derart entlang der Form-Oberfläche aufgespannt werden, dass die Rovings R die Form-Oberfläche zumindest bereichsweise überdecken. Zu diesem Zweck werden die Rovings R mittels einer Aufbringungs-Vorrichtung 13 unter Aufrechterhaltung einer vorbestimmten Mindest-Zugspannung um die Umlenk-Vorrichtungen 10 gelegt und gespannt.

Die Auftrags-Oberflächen 3a, 3b, 3c bilden somit den Bereich, auf dem die Rovings R nach dem Aufspannen zwischen die Umlenk-Vorrichtungen 10 aufliegen. Die Lage der Auftrags-Oberflächen 3a, 3b, 3c wird somit bestimmt durch die Lage der Umlenk-Vorrichtungen 10 und erstrecken sich somit zumindest zwischen den Umlenk-Vorrichtungen 10. Die Form-Oberflächen 3a, 3b, 3c des Formwerkzeugs 3 sind derart gestaltet und die Umlenk-Vorrichtungen 10 sind derart auf der Form-Oberfläche 3 angeordnet, dass die mittels dieser unter Aufrechterhaltung einer vorbestimmten Mindest-Zugspannung aufgespannten Rovings R eine Orientierung haben, die die Orientierungen der Rovings bzw. Fasern in dem herzustellenden Bauteil bestimmt und auch in Grenzen identisch sein können.

Die zumindest eine Auftrags-Oberfläche 3a, 3b, 3c bzw. die Form-Oberfläche 3 des Formwerkzeugs 1 kann erfindungsgemäß eine bereichsweise nicht-abwickelbare Oberflächengestalt haben, so dass die Rovings R auch diesen Bereich überdecken und das herzustellende Bauteil ebenfalls eine bereichsweise nicht-abwickelbare Oberflächengestalt hat.

Bei einem erfindungsgemäßen Ausführungsbeispiel ist also ein Formwerkzeug 1 zur Herstellung eines FVW/FVK-Bauteils aus Endlos-Fasern vorgesehen, das eine Form-Oberfläche 3 mit einer bereichsweise nicht-abwickelbaren Oberflächengestalt aufweist. Auf der Form-Oberfläche 3 können Umlenk-Vorrichtungen angeordnet sein, die von der Form-Oberfläche 3 wegragen und die mittels einer Verstellvorrichtung zum Lösen des Preforms relativ zur Form-Oberfläche und insbesondere unter die Form-Oberfläche 3 in das Formwerkzeug 1 einfahrbar sind. Die Umlenk-Vorrichtungen können Stifte aufweisen oder aus diesen gebildet sein, die von der Form-Oberfläche 3 des Formwerkzeugs 1 wegragen. Hierzu kann jede Umlenk-Vorrichtung jeweils eine Verstellvorrichtung mit einer Antriebsvorrichtung gekoppelt sein. Die Antriebsvorrichtungen können funktional einzeln mit einer Steuervorrichtung gekoppelt sein und die Steuervorrichtung kann derart eingerichtet sein, dass diese die Antriebsvorrichtungen zur Verstellung, also zum Ein- und Ausfahren der Umlenkvorrichtungen in Bezug auf die Form-Oberfläche 3 ansteuern können

Es kann vorgesehen sein, dass zwei Lagen oder mehrere Lagen von Rovings R auf die Auftrags-Oberfläche aufgetragen werden. Dabei kann vorgesehen sein, dass Lagen von Rovings mit zueinander unterschiedlichen Orientierungen der Rovings aufgetragen werden. Die verschiedenen Lagen von Rovings können aus verschiedenen Materialien gebildet sein.

Nach dem Aufspannen der Rovings R erfolgt erfindungsgemäß ein Auftragen von Bindermaterial auf die aufgespannten Rovings R und gleichzeitig oder anschließend eine Konsolidierung oder eine Handhabbarmachung der Anordnung von Fasersträngen und Bindermaterial durch Anwendung von Temperatur und optional Druck. Durch die Konsolidierung wird ein Preform für das herzustellende Bauteil ausgebildet, da die entstehende Anordnung zumindest soweit verfestigt ist, dass die räumliche Gestalt der Anordnung auch bei der Entnahme derselben von dem Formwerkzeug 1 und bei einer Zuführung zu einem weiteren Werkzeug stabil ist, d.h. sich die Form des Preforms bei in bestimmter Weise vorgesehenen Handhabungen derselben nicht verändert.

Nach dem erfindungsgemäßen Verfahren erfolgt dann ein Lösen des Preforms von den Umlenk-Vorrichtungen und eine Entnahme des Preforms von dem Formwerkzeug 1. Nach dem Lösen des Preforms von den Umlenk-Vorrichtungen und von dem Formwerkzeug 1 erfolgt erfindungsgemäß eine Durchführung eines Injektionsverfahrens oder Infusionsverfahrens zur Ausbildung des Bauteils. Das Injektionsverfahren oder das Infusionsverfahren kann insbesondere ein Pultrusionsverfahren sein. Je nachdem, ob dabei ein Harz oder ein Kunststoff verwendet wird, wird auf diese Weise ein Faserverbund-Werkstoff(FVW)- oder ein Faserverbund-Kunststoff(FVK)-Bauteil hergestellt.

Vor der Konsolidierung kann zumindest ein Teil der Rovings R zur Fixierung der Anordnung von Fasersträngen und Bindermaterial miteinander vernäht werden.

Das Aufbringen der Rovings R und das Aufbringen von Bindermaterial kann hintereinander, gleichzeitig oder mehrfach abwechselnd erfolgen.

Das Bindermaterial kann ein Binderpulver sein, das während dem Aufbringen der Rovings zusätzlich auf diese und/oder zwischen diese ein- oder aufgebracht wird.

Das Bindermaterial kann generell eine Flüssigkeit oder ein Pulver sein und kann insbesondere durch Aufsprühen aufgebracht werden.

Alternativ oder zusätzlich kann als Bindermaterial ein Vlies verwendet werden, das nach dem Auftragen von Fasersträngen auf die Werkzeugform auf die Faserstränge aufgelegt oder aufgebracht wird. Dabei kann vorgesehen sein, dass das Vlies an mehrere der Umlenk-Vorrichtungen aufgesteckt oder befestigt wird.

Bei einer weiteren Ausführungsform des erfindungsgemäßen Verfahrens kann als Bindermaterial ein Binderfaden oder mehrere Binderfäden verwendet werden ist und der Binderfaden zusammen mit jedem Endlos-Faserstrang aufgebracht wird.

Weiterhin kann vorgesehen sein, dass nach dem Auftragen von Fasersträngen auf diese Fasermatten, Mulitaxialgelege (MAGs), Gewebe, Gestricke, Zwickelfüller, Geflechte, Maschenware, Vliese oder Gewirke aufgelegt werden. Dabei kann in einem weiteren Verfahrensschritt vorgesehen sein, dass zur Bildung des Preforms die Fasermatten, MAGS, Gewebe, Gestricke, Zwickelfüller, Geflechte, Maschenware, Vliese oder Gewirke an den Umlenk-Vorrichtungen fixiert werden. Die Fasermatten, MAGS, Gewebe, Gestricke, Zwickelfüller, Geflechte, Maschenware, Vliese oder Gewirke können insbesondere mit den Rovings R bei deren Aufbringen fixiert werden. Nach dem Auftragen von Rovings R können diese mit Harz benetzt werden. Dabei kann vorgesehen sein, dass nach dem Auftragen zumindest eines Teils von Trockenfaser-Strängen auf diese Prepregs aufgelegt werden.

Zur Stabilisierung des Preforms und/oder zur Erreichung vorbestimmter Eigenschaften bei dem mit dem Preform herzustellenden Bauteil kann weiterhin vorgesehen sein, dass nach dem Auftragen zumindest eines Teils von Rovings R auf diese Metall-Inserts, Verstärkungen aus ganz oder teilweise ausgehärteten FVK und/oder FVW, Kernmaterialen für Hohlräume, Kunststoff- oder Metall-Schäume oder Wabenstrukturen aufgelegt werden. Dabei kann insbesondere vorgesehen sein, dass die Metall-Inserts, Verstärkungen aus ganz oder teilweise ausgehärteten FVK und/oder FVW, Kernmaterialen für Hohlräume, Schäume oder Wabenstrukturen mit den Rovings R bei deren Aufbringen fixiert werden.

Die Umlenk-Vorrichtungen 10 können in Bezug auf die Form-Oberfläche 3 einfahrbar an dem Formwerkzeug 1 angeordnet sein und das Lösen des Preforms von den Umlenk-Vorrichtungen kann durch Einfahren der bewegbar am Formwerkzeug 1 angeordneten Umlenk-Vorrichtungen 10 erfolgen.

Alternativ kann das Lösen des Preforms von den Umlenk-Vorrichtungen durch Abschneiden der von zumindest einem Teil der Umlenk-Vorrichtungen umgelenkten Rovings R in der Nähe der Umlenk-Vorrichtungen erfolgen.

Die Zufuhr der Rovings R zum Aufbringen auf die Form-Oberfläche 3 kann auf verschiedene Weise erfolgen. Die Rovings R können direkt von einer Roving-Aufnahmerolle in der gewünschten Faserorientierung auf das Formwerkzeug 1 abgelegt werden. Alternativ kann das Ablegen oder Aufspannen der Rovings R mittels einer Rohrführung erfolgen, durch die die auf das Formwerkzeug 1 aufzubringenden Rovings R geführt werden. Die Rohrführung 13a kann insbesondere in seiner Längsrichtung gekrümmt ausgebildet sein, so dass die Richtung der durch diese geführten Rovings R auf vorbestimmte Weise geändert wird. Dadurch können die Rovings in einer vorbestimmten Orientierung und unter Aufrechterhaltung einer vorbestimmten Mindest-Zugspannung mit einer vorbestimmten Zugkraft zwischen um die Umlenk-Vorrichtungen gelegt oder gespannt werden. Die Rohrführung 13a ist selbst mittels einer geeigneten Bewegungsmechanik und einer zugehörigen Verstellvorrichtung räumlich gegenüber dem Formwerkzeug bewegbar angeordnet. Die Roving-Zuführung kann auch mittels eines Roboters oder Roboterarms erfolgen, der sich relativ zum Formwerkzeug 1 bewegbar ist. Die Bewegung des Roboterarms oder die Betätigung der Verstellvorrichtung kann durch eine Steuerungseinrichtung gesteuert oder geregelt sein.

Die Konsolidierung der Anordnung von Fasersträngen kann durch ein Vakuum-Verfahren erfolgen. Die Konsolidierung der Anordnung von Fasersträngen kann nach dem Ablegevorgang oder auch zwischen einzelnen Legesequenzen, in denen Rovings auf das Formwerkzeug 1 aufgebrachte werden, erfolgen.

Auch kann die Konsolidierung der Anordnung von Fasersträngen durch Auflegen einer Vakuum-Matte auf das Formwerkzeug 1 mit der Anordnung aus Rovings R und Bindermaterial und eine Auflagefläche und Erzeugen von Unterdruck zwischen der Auflagefläche und der Vakuum-Matte mit Erwärmung der Anordnung aus Rovings R und Bindermaterial erfolgen.

Weiterhin kann vorgesehen sein, dass die Konsolidierung der Anordnung von Fasersträngen durch ein Heiz-Pressverfahren mit Heiz-Stempel erfolgt.

Das erfindungsgemäße Formwerkzeug 1 zur Herstellung eines FVW/FVK-Bauteils aus Endlos-Fasern weist somit eine Form-Oberfläche 3 mit einer bereichsweise nicht-abwickelbaren Oberflächengestalt auf. Auf der Form-Oberfläche 3 sind Umlenk-Vorrichtungen angeordnet, die von der Form-Oberfläche 3 wegragen und die mittels einer Verstellvorrichtung zum Lösen des Preforms unter die Form-Oberfläche 3 in das Formwerkzeug 1 einfahrbar sind.

Die Umlenk-Vorrichtungen können insbesondere Stifte aufweisen, die von der Form-Oberfläche 3 des Formwerkzeugs 1 wegragen.

An jede Umlenk-Vorrichtung kann jeweils eine Verstellvorrichtung mit einer Antriebsvorrichtung gekoppelt sein. Dabei kann insbesondere vorgesehen sein, dass die Antriebsvorrichtungen einzeln von einer Steuervorrichtung angesteuert werden können.

## Patentansprüche

1. Verfahren zur Herstellung eines FVW/FVK-Bauteils mit einer zumindest teilweisen nicht abwickelbaren Gestalt aus Rovings (R) mit einem Formwerkzeug (1) mit einer Form-Oberfläche (3), aufweisend die Schritte:
▪ Auftragen zumindest eines aus trockenen Fasern gebildeten Rovings (R) auf die Form-Oberfläche (3) durch Spannen des Rovings (R) mittels einer Aufbringungs-Vorrichtung (13) unter Aufrechterhaltung einer vorbestimmten Mindest-Zugspannung zwischen Umlenk-Vorrichtungen (10) in vorgegebenen Orientierungen, die seitlich einer zumindest bereichsweise konvex geformte Auftrags-Oberfläche und in Längsrichtung (L) derselben angeordnet sind, wobei die Rovings (R) zwischen den Umlenk-Vorrichtungen derart entlang der Form-Oberfläche (3) aufgespannt werden, dass die Rovings (R) die Form-Oberfläche (3) zumindest bereichsweise überdecken, wobei die Form-Oberfläche (3) des Formwerkzeugs (1) derart gestaltet ist und die Umlenk-Vorrichtungen derart auf der Form-Oberfläche (3) angeordnet sind, dass diese die Auftrags-Oberfläche mit einer bereichsweise nicht-abwickelbaren Oberflächengestalt abstecken;
▪ Auftragen von Bindermaterial auf die aufgespannten Rovings (R);
▪ Konsolidierung der Anordnung von Fasersträngen und Bindermaterial durch Anwendung von Temperatur zur Ausbildung eines Preforms für das herzustellende Bauteil;
▪ Lösen des Preforms von den Umlenk-Vorrichtungen und Entnahme des Preforms von dem Formwerkzeug (1); und
▪ nach dem Lösen des Preforms von den Umlenk-Vorrichtungen Durchführung eines Injektionsverfahrens oder Infusionsverfahrens zur Ausbildung des Bauteils.

2. Verfahren nach einem der voranstehenden Ansprüche,
**dadurch gekennzeichnet, dass** zumindest ein Teil der Rovinge (R) zur Fixierung der Anordnung von Fasersträngen und Bindermaterial miteinander vernäht werden.

3. Verfahren nach einem der voranstehenden Ansprüche,
**dadurch gekennzeichnet, dass** das Aufbringen der Rovings (R) und das Aufbringen von Bindermaterial hintereinander, gleichzeitig oder mehrfach abwechselnd erfolgt.

4. Verfahren nach einem der voranstehenden Ansprüche,
**dadurch gekennzeichnet, dass** das Bindermaterial aus einem Vlies gebildet ist und das Vlies nach dem Auftragen von Fasersträngen auf die Werkzeugform auf die Faserstränge aufgebracht wird, wobei das Vlies bevorzugt an mehrere der Umlenk-Vorrichtungen aufgesteckt oder befestigt wird.

5. Verfahren nach einem der voranstehenden Ansprüche,
**dadurch gekennzeichnet, dass** das Lösen des Preforms von den Umlenk-Vorrichtungen durch Einfahren der bewegbar am Formwerkzeug (1) angeordneten Umlenk-Vorrichtungen erfolgt, oder
dass das Lösen des Preforms von den Umlenk-Vorrichtungen durch Abschneiden der von zumindest einem Teil der Umlenk-Vorrichtungen umgelenkten Rovings (R) in der Nähe der Umlenk-Vorrichtungen erfolgt.

6. Verfahren nach einem der voranstehenden Ansprüche,
**dadurch gekennzeichnet, dass** die Konsolidierung der Anordnung von Rovings (R) durch ein Vakuum-Verfahren, insbesondere durch Auflegen einer Vakuum-Matte auf das Formwerkzeug (1) mit der Anordnung aus Rovings (R) und Bindermaterial und eine Auflagefläche und Erzeugen von Unterdruck zwischen der Auflagefläche und der Vakuum-Matte mit Erwärmung der Anordnung aus Rovings (R) und Bindermaterial erfolgt, und/oder
dass die Konsolidierung der Anordnung von Rovings (R) nach dem Ablegevorgang oder auch zwischen einzelnen Legesequenzen, in denen Rovings auf das Formwerkzeug (1) aufgebracht werden, erfolgt.

7. Verfahren nach einem der voranstehenden Ansprüche,
**dadurch gekennzeichnet**,
▪ dass vor dem Auftragen des zumindest einen Rovings (R) auf die Form-Oberfläche (3) des Formwerkzeugs (1) dieses auf einer Werkzeugauflage-Vorrichtung angeordnet wird, wobei die Werkzeugauflage-Vorrichtung Umlenkbereiche (U) aufweist, die bei von der Werkzeugauflage-Vorrichtung mittels der Aufnahmevorrichtung aufgenommenem Formwerkzeug (1) sich in der Längsrichtung (L) und entlang der Form-Oberfläche (3) erstrecken und eine Vielzahl von Umlenk-Vorrichtungen (10) aufweisen, wobei sich die Umlenkbereiche (U) auf jeweils einander entgegengesetzt zueinander gelegenen Seiten der Form-Oberfläche (3) erstrecken,
▪ dass nach dem Auftragen des Rovings (R) auf die Form-Oberfläche (3) des Formwerkzeugs (1) mittels Umlenkung der Endlosfasern durch die Umlenk-Vorrichtungen (10) das Auftragen von Bindermaterial, die Konsolidierung der Anordnung von Fasersträngen und Bindermaterial und das Lösen des Preforms von dem Formwerkzeug (1) erfolgen.

8. Formwerkzeug (1) zur Herstellung eines FVW/FVK-Bauteils mit einer zumindest teilweisen nicht abwickelbaren Gestalt aus Endlosfasern (R), aufweisend eine zumindest bereichsweise konvex geformte Form-Oberfläche (3), welche eine bereichsweise nicht-abwickelbare Oberflächengestalt aufweist,
**dadurch gekennzeichnet, dass** das Formwerkzeug (1) zwei außerhalb der Form-Oberfläche (3) und in der Längsrichtung (L) und entlang der Form-Oberfläche (3) verlaufende Umlenkbereiche (U) und eine Vielzahl von Umlenk-Vorrichtungen (10) aufweist, wobei sich die Umlenkbereiche (U) auf jeweils einander entgegengesetzt zueinander gelegenen Seiten der Form-Oberfläche (3) erstrecken und wobei über die Umlenkbereiche (U) entlang der Längsrichtung (L) die in den Umlenkbereichen (U) angeordneten Umlenk-Vorrichtungen (10) verteilt sind, so dass die Umlenk-Vorrichtungen (10) zur Umlenkung des zumindest einen über die Form-Oberfläche (3) unter Aufrechterhaltung einer vorbestimmten Mindest-Zugspannung gespannten Rovings (R) geeignet sind.

9. Formwerkzeug (1) nach dem Anspruch 8,
**dadurch gekennzeichnet, dass** die Umlenk-Vorrichtungen (10) mittels einer Verstellvorrichtung zum Lösen des Preforms unter die Form-Oberfläche (3) in das Formwerkzeug (1) einfahrbar sind und derart gestaltet sind, dass diese beim Einfahren die an diesen umgelenkten Endlosfasern (R) abstreifen.

10. Formwerkzeug (1) nach einem der voranstehenden Ansprüche 8 bis 9,
**dadurch gekennzeichnet, dass** Umlenk-Vorrichtungen Stifte aufweisen, die von der Form-Oberfläche (3) des Formwerkzeugs (1) wegragen.

11. Formwerkzeug (1) einem der voranstehenden Ansprüche 8 bis 10,
**dadurch gekennzeichnet, dass** jeder Umlenk-Vorrichtung jeweils eine Verstellvorrichtung mit einer Antriebsvorrichtung gekoppelt ist, wobei die Antriebsvorrichtungen einzeln von einer Steuervorrichtung angesteuert werden können.

12. Herstellungsvorrichtung mit einem Formwerkzeug (1) und einer Werkzeugauflage-Vorrichtung zur Herstellung eines FVW/FVK-Bauteils mit einer zumindest teilweisen nicht abwickelbaren Gestalt aus zumindest einem Roving (R), **dadurch gekennzeichnet**,
▪ dass die Herstellungsvorrichtung eine Abgabevorrichtung zur Abgabe des zumindest einen Rovings aufweist,
▪ dass das Formwerkzeug (1) eine nach außen gewölbte Form-Oberfläche (3) aufweist,
▪ dass die Werkzeugauflage-Vorrichtung eine Aufnahmevorrichtung zur Aufnahme des Formwerkzeugs (1) sowie Umlenkbereiche (U) aufweist, die bei von der Werkzeugauflage-Vorrichtung mittels der Aufnahmevorrichtung aufgenommenem Formwerkzeug (1) sich in der Längsrichtung (L) und entlang der Form-Oberfläche (3) erstrecken und eine Vielzahl von Umlenk-Vorrichtungen (10) aufweisen, wobei sich die Umlenkbereiche (U) auf jeweils einander entgegengesetzt zueinander gelegenen Seiten der Form-Oberfläche (3) erstrecken, und
▪ dass über die Umlenkbereiche (U) entlang der Längsrichtung (L) die in den Umlenkbereichen (U) angeordneten Umlenk-Vorrichtungen (10) verteilt sind, so dass die Umlenk-Vorrichtungen (10) zur Umlenkung des über die Form-Oberfläche (3) unter Aufrechterhaltung einer vorbestimmten Mindest-Zugspannung gespannten Rovings (R) geeignet sind.

13. Herstellungsvorrichtung nach dem Anspruch 12,
**dadurch gekennzeichnet, dass** die Herstellungsvorrichtung eine Ablagevorrichtung mit einer Vorspanneinrichtung aufweist, mit der die Endlosfasern mit der vorbestimmten Mindest-Zugspannung mittels Umlenkung durch die Umlenk-Vorrichtungen (10) über die Form-Oberfläche (3) gespannt werden können.

14. Herstellungsvorrichtung nach dem Anspruch 12 oder 13,
**dadurch gekennzeichnet, dass** die Ablagevorrichtung einen Roboterarm aufweist, der eine Einlassvorrichtung zum Einführen zumindest eines Rovings (R) und eine an dessen dreidimensional bewegbarem Ende angeordnete Auslassvorrichtung zum Herausführen des Rovings aufweist wobei der Roboterarm insbesondere eine in Faserlängsrichtung einer von dem Roboterarm aufgenommenen Rovings gesehen hinter dem bewegbaren Ende gelegene Kinematik zum Ausgleich von Relativbewegungen gegenüber Umlenk-Vorrichtungen (10) aufweist.

15. Herstellungsvorrichtung nach einem der voranstehenden Ansprüche 12 bis 14,
**dadurch gekennzeichnet, dass** die Herstellungsvorrichtung eine Rolle zur Aufnahme des Rovings aufweist und dass die Aufnahmerolle mit einer Rutschkupplung gelagert ist, durch die die Zugspannung, mit der der Roving auf die Form-Oberfläche (3) gespannt werden, auf einen maximalen Wert begrenzt wird.

## Claims

1. A method for producing an FRC/FRP component by means of an at least partially undevelopable shape of rovings (R) using a mold tool (1) having a mold surface (3), comprising the steps:
▪ application of at least one roving (R) formed from dry fibers to the mold surface (3) by tensioning the roving (R) by means of an application device (13) while maintaining a predetermined minimum tensile stress between deflection devices (10) in predetermined orientations, which are arranged laterally of an application surface that has a convex shape at least in certain areas and in a longitudinal direction thereof, wherein rovings (R) are stretched between the deflection devices along the mold surface (3) in such a way that the rovings (R) cover the mold surface (3) at least in certain areas, the mold surface (3) of the mold tool (1) being designed in such a way that the deflection devices are arranged on the mold surface (3) in such a way that they define the application surface by means of an undevelopable surface shape in certain areas;
▪ application of binder material onto the tensioned rovings (R);
▪ consolidation if the arrangement of fiber strands and binder material by applying heat to form a preform for the component to be manufactured;
▪ detachment of the preform from the deflection devices and removing the preform from the mold tool (1); and
▪ after the preform has been detached from the deflection devices, an injection process or an infusion process is conducted to form the component.

2. The method according to one of the preceding claims, wherein at least part of the rovings (R) are sewn to one another to secure the arrangement of fiber strands and binder material.

3. The method according to one of the preceding claims, **characterized in that** the rovings (R) and the binder material are applied successively, simultaneously or repeatedly alternately.

4. The method according to one of the preceding claims, **characterized in that** the binder material is formed by a non-woven and the non-woven is applied onto the fiber strands after the application thereof onto the tool mold, the non-woven preferably being attached or fastened to a plurality of the deflection devices.

5. The method according to one of the preceding claims, **characterized in that** the preform is detached from the deflection devices by retracting the deflection devices, which are movably arranged on the shaping tool (1) or
**in that** the preform is detached from the deflection devices by cutting the rovings (R) deflected by at least a part of the deflection devices in the vicinity of the deflection devices.

6. The method according to one of the preceding claims, **characterized in that** the arrangement of rovings (R) is consolidated by a vacuum method, in particular by placing a vacuum mat on the mold tool (1) with the arrangement of rovings (R) and binder material and a support surface and by generating a negative pressure between the support surface and the vacuum mat while the arrangement of rovings and binder material are being heated, and/or
**in that** the arrangement of rovings (R) is consolidated after the depositing process or even between individual laying sequences in which rovings are applied to the mold tool (1).

7. The method according to one of the preceding claims, **characterized in that** the
▪ prior to the application of the at least one roving (R) to the mold surface (3) of the mold tool (1), the latter is arranged on a tool support device, wherein the tool support device has deflection regions (U) comprising a plurality of deflection devices (10) and extending in longitudinal direction (L) and along the mold surface (3) for mold tools (1) picked up from the tool support device by means of the pick-up device, wherein the deflection regions (U) extend along sides of the mold surface (3) facing away from each other,
▪ the application of binder material, the consolidation of the arrangement of fiber strands and binder material and the detachment of the preform from the shaping tool (1) occur by deflecting the continuous fibers in the deflection devices (10), after the rovings (R) have been applied to the mold surface (3) of the mold tool (1).

8. A mold tool (1) for manufacturing an FRC/FRP-component having at least in part an undevelopable shape of continuous fibers (R), comprising a shaping surface (3), which is at least partially convex in shape and having at least in part an undevelopable shape, **characterized in that** the mold tool (1) has two deflection regions (U) extending outside the mold surface (3) and in longitudinal direction (L) and along the mold surface (3), and a plurality of deflection devices (10), wherein the deflection regions (U) extend along sides of the mold surface (3) facing away from each other and wherein the deflection devices (10) arranged in the deflection regions (U) are arranged along the longitudinal direction (L) by means of the deflection regions (U), in such a manner that the deflecting devices (10) are suitable for deflecting the at least one roving (R) tensioned over the mold surface (3) while maintaining a predetermined minimum tensile stress.

9. The mold tool (1) according to claim 8, **characterized in that** the deflection devices (10) can be retracted into the mold tool (1) by means of an adjusting device for detaching the preform under the mold surface (3), and that they are designed in such a way that they strip off the continuous fibers (R) deflected thereon during their retraction.

10. The mold tool (1) according to one of the preceding claims 8 to 9, **characterized in that** the deflection devices have pins, which protrude from the mold surface (3) of the mold tool (1).

11. The mold tool (1) according to one of the preceding claims 8 to 10, **characterized in that** every deflection device is in each case coupled to an adjusting device having a drive device, the drive devices being individually controllable by a control device.

12. A manufacturing device having a mold tool (1) and a tool support device for manufacturing an FRC/FRP component having at least in part an undevelopable shape, comprising at least one roving (R), **characterized in that**
▪ the manufacturing device has a delivery device for delivering the at least one roving,
▪ the mold tool (1) has a convex mold surface (3),
▪ the tool support device comprises a pick-up device for accommodating the mold tool (1) as well as deflection regions (U), which, in the case of a mold tool (1) accommodated by the tool support device by means of the pick-up device, extend in longitudinal direction (L) and along the mold surface (3), and have a plurality of deflection devices (10), wherein the deflection regions (U) extend along sides of the mold surface (3) facing away from each other, and
▪ the deflection devices (10) arranged in the deflection regions (U) are arranged along the longitudinal direction (L) by means of the deflection regions (U), in such a manner that the deflecting devices (10) are suitable for deflecting the at least one roving (R) tensioned over the mold surface (3) while maintaining a predetermined minimum tensile stress.

13. The manufacturing device according to claim 12, **characterized in that** the manufacturing device has a depositing device with a pretensioning device, which can be used to tension the continuous fibers using the deflection devices (10) via the mold surface (3) with the predetermined minimum tensile stress.

14. The manufacturing device according to claim 12 or 13, **characterized in that** the depositing device has a robot arm having an inlet device for inserting at least one roving and an outlet device arranged on its three-dimensionally movable end for routing the roving out again, wherein the robot arm has a kinematics located behind the moveable end for compensating relative movements against deflection devices (10), in particular as viewed in the longitudinal direction of the fiber of a roving picked up by the robot arm.

15. The manufacturing device according to one of the preceding claims 12 to 14, **characterized in that** the manufacturing device has a roller for receiving the roving and that the receiving roller is mounted by means of a friction clutch by which the tensile stress with used to apply the roving to the mold surface (3) is limited to a maximum value.

## Revendications

1. Procédé de fabrication d'un élément structural en matière renforcée par des fibres / matière plastique renforcée par des fibres comprenant présentant au moins à certains endroits une structure non déroulable de roving (R) à l'aide d'un outil de moulage (1) ayant une surface (3) de moulage, comprenant les étapes consistant à
▪ Appliquer au moins un roving (R) formé à partir de fibres sèches sur la surface (3) de moulage par serrage du roving (R) au moyen d'un dispositif d'application (13) par maintien d'au moins un serrage par traction minimum prédéfini entre les dispositifs d'orientation (10) dans des orientations prédéfinies, qui sont disposés latéralement d'une surface d'application convexe au moins à certains endroits et dans la direction longitudinale (L) de ces derniers, les roving (R) étant serrés entre les dispositifs déflecteurs le long de la surface (3) de moulage de sorte que les roving (R) recouvrent la surface (3) de moulage au moins à certains endroits, la surface (3) de moulage de l'outil de moulage (1) étant conçue de telle sorte et les dispositifs d'orientation étant disposés sur la surface (3) de moulage de telle sorte qu'ils fixent la surface d'application à une structure de surface non déroulable à certains endroits ;
▪ appliquer le matériau liant sur les roving (R) serrés ;
▪ consolider l'agencement des faisceaux de fibres et du matériau liant par application de température pour former une préforme pour l'élément structural à fabriquer ;
▪ extraire la préforme des dispositifs d'orientation et retirer la préforme de l'outil de moulage (1) ;et
▪ une fois la préforme extraite des dispositifs d'orientation, exécuter le procédé d'injection ou d'infusion pour former l'élément structural.

2. Procédé selon l'une quelconque des revendications précédentes, **caractérisé en ce qu'**au moins une partie des roving (R) sont cousus ensemble pour fixer l'agencement des faisceaux de fibres et du matériau liant.

3. Procédé selon l'une quelconque des revendications précédentes, **caractérisé en ce que** l'application des roving (R), l'application du matériau liant s'effectue consécutivement, simultanément ou en alternance.

4. Procédé selon l'une quelconque des revendications précédentes, **caractérisé en ce que** le matériau liant est constitué d'un non-tissé et que le non-tissé après l'application des faisceaux de fibres sur la forme de l'outil est appliqué sur les faisceaux de fibres, le non-tissé étant fixé ou attaché de préférence sur plusieurs dispositifs d'orientation.

5. Procédé selon l'une quelconque des revendications précédentes, **caractérisé en ce que** l'extraction de la préforme des dispositifs d'orientation s'effectue par l'insertion des dispositifs d'orientation disposés mobiles sur l'outil de formage (1), ou en ce que l'extraction de la préforme des dispositifs d'orientation s'effectue par la coupe d'au moins une partie des roving (R) orientées par au moins une partie des dispositifs d'orientation à proximité des dispositifs d'orientation.

6. Procédé selon l'une quelconque des revendications précédentes, **caractérisé en ce que** la consolidation de l'agencement des roving (R) s'effectue selon un procédé sous vide, en particulier par l'application d'un mat sous vide sur l'outil de formage (1) ayant l'agencement de roving (R) et le matériau liant et une surface d'application et par production d'un vide entre la surface d'application et le mat sous vide par chauffage de l'agencement de roving (R) et du matériau liant, et/ou **en ce que** la consolidation de l'agencement de roving (R) s'effectue après le processus d'application ou également entre les différentes séquences d'application, durant lesquelles les roving sont appliqués sur l'outil de formage (1).

7. Procédé selon l'une quelconque des revendications précédentes, **caractérisé en ce que**
▪ avant l'application dudit roving (R) sur la surface (3) de moulage de l'outil de moulage (1), celui-ci est disposé sur un dispositif d'application d'outil, le dispositif d'application d'outil présentant des zones d'orientation (U) qui à partir du dispositif d'application d'outil au moyen de l'outil de moulage (1) logé dans le dispositif de réception s'étendent dans la direction longitudinale (L) et le long de la surface (3) de moulage et présentent une pluralité des dispositifs d'orientation (10), les zones d'orientation (U) s'étendant sur chacun des côtés en regard les uns des autres de la surface (3) de moulage,
▪ **en ce qu'**après l'application du roving (R) sur la surface (3) de moulage de l'outil de moulage (1) au moyen de l'orientation des fibres continues par les dispositifs d'orientation (10) s'effectuent l'application du matériau liant, la consolidation de l'agencement des faisceaux de fibres et du matériau liant et l'extraction de la préforme de l'outil de moulage (1).

8. Outil de moulage (1) servant à fabriquer un élément structural en matière plastique renforcée par des fibres/matière renforcée par des fibres comprenant une structure non déroulable au moins à certains endroits constituée de fibres continues (R), présentant une surface (3) de moulage convexe au moins à certains endroits, **caractérisé en ce que** l'outil de moulage (1) présente deux zones d'orientation (U) s'étendant à l'extérieur de la surface (3) de moulage et dans la direction longitudinale (L) et le long de la surface (3) de moulage et une pluralité de dispositifs d'orientation (10), les zones d'orientation (U) s'étendant sur respectivement les côtés en regard les uns des autres de la surface (3) de moulage et les dispositifs d'orientation (10) disposés dans les zones d'orientation (U) étant répartis sur les zones de d'orientation (U) le long de la direction longitudinale (L), de sorte que les dispositifs d'orientation (10) soient appropriés pour orienter ledit roving (R) serré (3) sur la surface (3) de moulage par maintien d'une tension de traction minimum prédéfinie.

9. Outil de moulage (1) selon la revendication 8, **caractérisé en ce que** les dispositifs d'orientation (10) peuvent être introduits au moyen d'un dispositif de réglage pour extraire la préforme sous la surface (3) de moulage dans l'outil de moulage (1) et sont conçus de sorte que lors de l'introduction ceux-ci démoulent les fibres continues (R) orientées.

10. Outil de moulage (1) selon l'une quelconque des revendications précédentes 8 à 9, **caractérisé en ce que** les dispositifs d'orientation présentent des tiges qui font saillie depuis la surface (3) de moulage de l'outil de moulage (1).

11. Outil de moulage (1) selon l'une quelconque des revendications précédentes 8 à 10, **caractérisé en ce que** chaque dispositif d'orientation respectivement un dispositif de réglage est couplé à un dispositif d'entraînement, les dispositifs d'entraînement pouvant être commandés individuellement par un dispositif de commande.

12. Dispositif de fabrication comprenant un outil de moulage (1) et un dispositif d'application d'outil servant à fabriquer un élément structural en matière renforcée par des fibres/matière plastique renforcée par des fibres, une structure non déroulable au moins en partie étant constituée d'au moins un roving (R), **caractérisé en ce que**
▪ le dispositif de fabrication présente un dispositif de distribution servant à distribuer ledit roving,
▪ **en ce que** l'outil de moulage (1) présente une surface (3) de moulage bombée vers l'extérieur,
▪ **en ce que** le dispositif d'application d'outil présente un dispositif de réception servant à recevoir l'outil de moulage (1) et des zones d'orientation (U), qui, lorsque l'outil de moulage (1) est logé à partir du dispositif d'application d'outil au moyen du dispositif de réception, s'étendent dans la direction longitudinale (L) et le long de la surface (3) de moulage et présentent une pluralité de dispositifs d'orientation (10), les zones d'orientation (U) s'étendant sur respectivement les côtés en regard les uns des autres de la surface (3) de moulage, et
▪ **en ce que** les dispositifs d'orientation (10) disposés dans les zones d'orientation (U) sont réparties sur les zones d'orientation (U) le long de la direction longitudinale (L), de sorte que les dispositifs d'orientation (10) soient appropriés pour orienter le roving (R) serré sur la surface (3) de moulage par maintien d'une tension de traction minimum prédéfinie.

13. Dispositif de fabrication selon la revendication 12, **caractérisé en ce que** le dispositif de fabrication présente un dispositif d'application comprenant un dispositif de précontrainte, avec lequel les fibres continues peuvent être serrées à la tension de traction minimum prédéfinie au moyen de l'orientation produite par les dispositifs d'orientation (10) sur la surface (3) de moulage.

14. Dispositif de fabrication selon la revendication 12 ou la revendication 13, **caractérisé en ce que** le dispositif d'application présente un bras robotisé, qui présente un dispositif d'admission destiné à introduire au moins un roving (R) et un dispositif d'admission disposé sur son extrémité mobile tridimensionnelle servant à faire sortie le roving, le bras robotisé présentant en particulier un mécanisme cinématique disposé derrière l'extrémité mobile lorsqu'il est observé dans la direction longitudinale de la fibre d'un roving logé dans le bras robotisé pour compenser les mouvements relatifs par rapport aux dispositifs d'orientation (10).

15. Dispositif de fabrication selon l'une quelconque des revendications 12 à 14, **caractérisé en ce que** le dispositif de fabrication présente un rouleau de réception du roving et **en ce que** le rouleau de réception est muni d'un embrayage coulissant, qui permet de limiter la tension de traction à une valeur maximale, selon laquelle le roving est serré sur la surface (3) de moulage.
